# EUROPÄISCHE PATENTSCHRIFT

(11) **EP 1 460 505 B1**
(45) Veröffentlichungstag und Bekanntmachung des Hinweises auf die Patenterteilung: **23.05.2007**
(21) Anmeldenummer: 04004925.6
(22) Anmeldetag: 03.03.2004
(51) Int. Cl.: G05D 16/20, G05D 7/06, G05D 27/02

(54) **Einrichtung zur ablösenden Regelung von Druck und Förderstrom eines hydraulischen Druckmittels**
System for controlling alternatively the pressure and the flow of a hydraulic fluid
Dispositif pour une régulation alternative de la pression et du débit d'un fluide hydraulique

(30) Priorität: 21.03.2003 DE 10312698
(43) Veröffentlichungstag der Anmeldung: 22.09.2004
(73) Patentinhaber: Bosch Rexroth AG, 70184 Stuttgart (DE)
(72) Erfinder: Bonefeld, Ralf, Dr., 63739 Aschaffenburg (DE); Liebler, Gerold, 97828 Marktheidenfeld (DE)

(56) Entgegenhaltungen:
- EP-A- 1 236 558
- DE-A1- 3 733 396
- DE-A1- 10 006 977

## Beschreibung

Die Erfindung betrifft eine Einrichtung zur ablösenden Regelung von Druck und Förderstrom eines hydraulischen Druckmittels, das einem von einer Last beaufschlagten Verbraucher zugeführt ist, gemäß dem Oberbegriff des Anspruchs 1.

Eine derartige Regeleinrichtung ist aus der DE 100 06 977 A1 bekannt. Die Figur 1 dieser Druckschrift zeigt eine Motor-Pumpe-Einheit in Form eines Hydrotransformators, bei dem ein aus einem Hydrauliknetz mit eingeprägtem Druck versorgter Hydromotor mit verstellbarem Schluckvolumen eine Hydropumpe mit konstantem Fördervolumen antreibt. Die jeweilige Lage des Schwenkwinkels der Stelleinrichtung für das Schluckvolumen des Hydromotors ist dabei gleichzeitig ein Maß für dessen Schluckvolumen. Die Hydropumpe versorgt einen Verbraucher, der als von einer Last beaufschlagter einfach wirkender Zylinder ausgebildet ist, mit hydraulischem Druckmittel. Die bekannte Regeleinrichtung weist einen Druckregler auf, der aus einem Druck-Sollwert und einem Druck-Istwert ein erstes Stellsignal bildet. Ein Förderstromregler bildet aus einem Förderstrom-Sollwert und einem aus der Drehzahl der Motor-Pumpe-Einheit abgeleiteten Förderstrom-Istwert ein zweites Stellsignal. Ein Auswahlglied wählt das kleinere der beiden Stellsignale aus und führt es der Stelleinrichtung für das Schluckvolumen des Hydromotors zu, so daß entweder der Druckregelkreis oder der Förderstromregelkreis wirksam ist. Der Hydromotor ist mit einem Drehzahlregelkreis sowie mit einem diesem unterlagerten Schwenkwinkelregelkreis versehen. Das von dem Auswahlglied ausgewählte Stellsignal ist dem Drehzahlregelkreis als Drehzahl-Sollwert zugeführt. Ein Drehzahlregler bildet aus der Abweichung des Drehzahl-Istwerts von dem Drehzahl-Sollwert ein Stellsignal, das dem unterlagerten Schwenkwinkelregelkreis als Schwenkwinkel-Sollwert zugeführt ist. Die Regelung des Schwenkwinkels entspricht hierbei einer Regelung des Antriebsdrehmoments des Hydromotors. Zur Erfassung des Druck-Istwerts dient ein mit dem Druck in der von der Hydropumpe zu dem Zylinder führenden Leitung beaufschlagter Drucksensor. Der Förderstrom-Istwert wird dagegen nicht direkt gemessen, sondern durch Multiplikation des Drehzahl-Istwerts mit einem das Fördervolumen der Hydropumpe berücksichtigenden konstanten Faktor ermittelt. Bei der Regelung von Druck und Förderstrom werden zur Verbesserung der Regelergebnisse zusätzlich zu den jeweiligen Istwerten die erste und die zweite zeitliche Ableitung des Druck-Istwertsignals sowie die erste zeitliche Ableitung des Förderstrom-Istwertsignals berücksichtigt. Da die zeitlichen Ableitungen der Istwerte nicht direkt erfaßt werden können, sondern durch Differenzierung aus den entsprechenden Istwertsignalen erzeugt werden müssen, wird nicht nur das Nutzsignal differenziert, sondern es werden auch dem Nutzsignal überlagerte Raüschsignale mit differenziert. Die differenzierten Rauschsignale sind dem Regler als Bestandteil der aus Sollwert und Istwert gebildeten Regeldifferenz zugeführt und verschlechtern dadurch wieder das Regelergebnis. Der dem Schwenkwinkelregelkreis überlagerte Drehzahlregelkreis des Hydromotors erfordert einen Regler mit PI-Verhalten. Der I-Anteil des Drehzahlreglers ist bei geschlossenem Druckregelkreis, d. h. dann wenn dem Drehzahlregler das Stellsignal des Druckreglers als Drehzahl-Sollwert zugeführt ist, von Nachteil. Um den Einfluß des I-Anteils des Drehzahlreglers bei geschlossenem Druckregelkreis auszugleichen, ist eine zweite zeitliche Ableitung des Druck-Istwerts erforderlich, bei der wieder außer dem Nutzsignal die Störsignale mit differenziert werden.

Der Erfindung liegt die Aufgabe zugrunde, eine Regeleinrichtung der eingangs genannten Art mit bei geschlossenem Druckregelkreis verbessertem Regelverhalten, insbesondere für Strecken mit kleiner hydraulischer Kapazität, zu schaffen.

Diese Aufgabe wird durch die im Anspruch 1 gekennzeichneten Merkmale gelöst. Die erfindungsgemäße Regeleinrichtung ermöglicht bei geschlossenem Druckregelkreis eine Steuerung des Antriebsdrehmoments des Motors zusammen mit einer dieser überlagerten Regelung. Dabei setzt sich der der Motor-Pumpe-Einheit zugeführte Drehmoment-Sollwert aus einem dem Druck-Sollwert proportionalen Anteil, einem von dem Druck-Istwert abhängigen Anteil und einem von der Druck-Regeldifferenz abhängigen Anteil zusammen. Eine Druckänderung führt über eine Änderung des Antriebsdrehmoments zu einer entsprechenden Änderung des dem Verbraucher zugeführten bzw. von diesem abgeführten Volumenstroms. Dabei wirkt die hydraulische Kapazität des an die Pumpe angeschlossenen Verbrauchers einschließlich der Leitungen und der Drucksensorik als Volumenstromdifferenzsensor, der die.Differenz zwischen dem abfließenden und dem zufließenden Volumenstrom bildet.

Vorteilhafte Weiterbildungen der Erfindung sind in den Unteransprüchen gekennzeichnet. Die im Anspruch 2 angegebene Maßnahme betrifft die Funktion des im Anspruch 1 angegebenen Auswahlglieds für den Fall, daß beide Stellsignale gleich groß sind. Die Maßnahmen des Anspruchs 3 vereinfachen die Optimierung der Parameter von Druck- und Förderstromregler. Die im Anspruch 4 angegebene Maßnahme spart ein P-Glied ein. Die im Anspruch 5 angegebenen Maßnahmen sorgen einerseits dafür, daß im eingeschwungenen Zustand der Druckregelung keine bleibende Regeldifferenz auftritt und andererseits dafür, daß das Ausgangssignal des Druckreglers bei offenem Druckregelkreis nicht wegdriftet. Die Ansprüche 6 und 7 geben Hinweise zum Einsatz unterschiedlicher Motoren im Zusammenhang mit der Erfindung.

Die Erfindung wird im folgenden mit ihren weiteren Einzelheiten anhand von in den Zeichnungen dargestellten Ausführungsbeispielen näher erläutert. Es zeigen
- Figur 1: das Blockschaltbild einer erfindungsgemäßen Einrichtung zur ablösenden Regelung von Druck und Förderstrom mit einer hydraulisch angetriebenen Motor-Pumpe-Einheit,
- Figur 2: das Blockschaltbild einer ersten Ausgestaltung des Drückreglers der erfindungsgemäßen Regeleinrichtung,
- Figur 3: das Blockschaltbild einer Ausgestaltung des Förderstromreglers der erfindungsgemäßen Regeleinrichtung,
- Figur 4: eine andere Darstellung des Förderstromreglers gemäß Figur 3,
- Figur 5: das Blockschaltbild eines gegenüber dem Druckregler gemäß Figur 2 um einen I-Anteil erweiterten Druckreglers und
- Figur 6: das Blockschaltbild einer elektrisch angetriebenen Motor-Pumpe-Einheit.

Gleiche Bauteile sind mit den gleichen Bezugszeichen versehen.

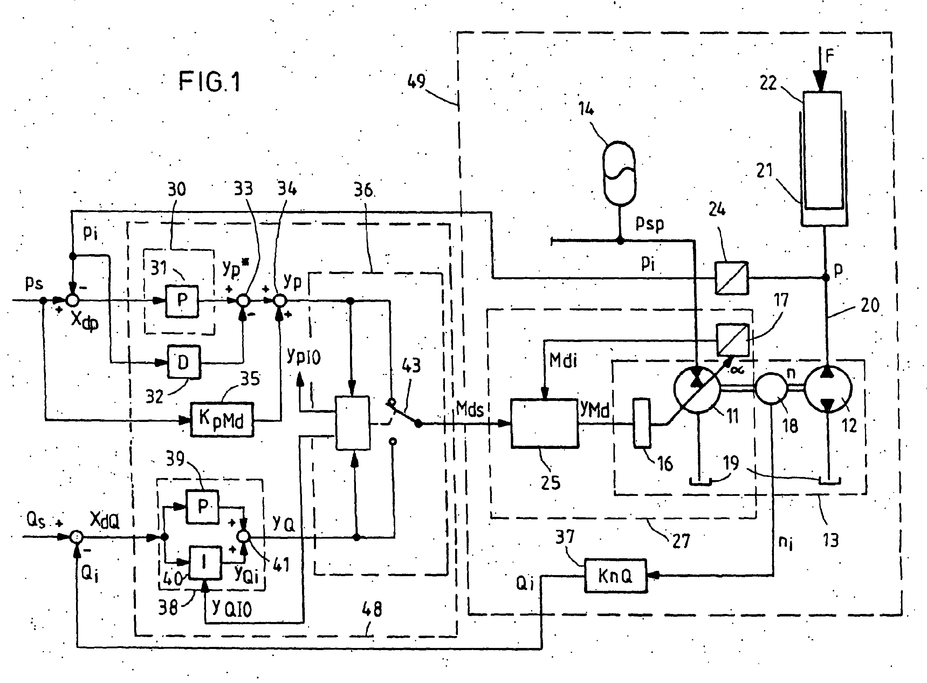

Die Figur 1 zeigt das Blockschaltbild einer erfindungsgemäßen Einrichtung zur ablösenden Regelung von Druck und Förderstrom eines hydraulischen Druckmittels, das einem von einer Last beaufschlagten Verbraucher im Form eines einfach wirkenden Zylinders zugeführt ist. Ein hydraulischer Motor 11 mit verstellbarem Schluckvolumen und eine von diesem angetriebene hydraulische Pumpe 12 mit konstantem Fördervolumen bilden eine Motor-Pumpe-Einheit 13. Derartige Motor-Pumpe-Eihheiten sind auch unter dem Begriff Hydrotransformator bekannt. Der Motor 11 wird aus einem Hydrauliknetz mit eingeprägtem Druck pₛₚ versorgt, das durch einen Speicher 14 angedeutet ist. Die Größe des Antriebsdrehmoments Md des Motors 11 ist durch Änderung des Schluckvolumens des Motors 11 einstellbar, wobei die Änderungen des Schluckvolumens durch Verstellung des im Folgenden mit α bezeichneten Schwenkwinkels einer in dem Motor 11 angeordneten Steuerscheibe erfolgen. Die Wirkrichtung des den Motor 11 antreibenden Moments ist durch die Richtung, in die die Steuerscheibe aus ihrer neutralen Stellung geschwenkt wird, bestimmt. Die Steuerscheibe selbst ist in der Figur 1 nicht dargestellt. Vorzeichen und Betrag des Schwenkwinkels α bestimmen somit Richtung und Größe des den Motor 11 antreibenden Moments. Eine Stelleinrichtung 16 setzt ein Steuersignal y_{Md} in den Winkel α um. Bei der Stelleinrichtung 16 handelt es sich z. B. um ein von einem elektrischen Signal gesteuertes Ventil, das die Zufuhr von Druckmittel zu einem hydraulischen Zylinder steuert, dessen Kolben die Steuerscheibe verstellt. Ein mit der Steuerscheibe verbundener Winkelgeber 17 formt den Winkel α in ein Signal um, das ein Maß für den Schwenkwinkel-Istwert ist. Durch Multiplikation dieses Signals mit einem Faktor K_{αMd}, der den Zusammenhang zwischen dem Schwenkwinkel α und dem Drehmoment Md berücksichtigt, erhält man einen Drehmoment-Istwert Mdᵢ. In dem hier beschriebenen Ausführungsbeispiel erfolgt die Multiplikation mit dem Faktor K_{αMd} bereits in dem Winkelgeber 17, so daß dessen Ausgangsgröße bereits der Drehmoment-Istwert Mdᵢ ist. Ein Drehzahlgeber 18 formt die Drehzahl n des die Pumpe 12 antreibenden Motors 11 in ein dem Drehzahl-Istwert entsprechendes Signal nᵢ um. Die Pumpe 12 fördert in der einen Drehrichtung aus einem Tank 19 Druckmittel über eine Leitung 20 zu einem einfach wirkenden Zylinder 21 mit einem Kolben 22. In der anderen Drehrichtung führt die Pumpe 12 Druckmittel von dem Zylinder 21 über die Leitung 20 zum Tank 19 zurück. Der Kolben 22 ist mit einer Kraft F beaufschlagt. Ein an die Leitung 20 angeschlossener Druckgeber 24 formt den Druck p des Druckmittels in ein dem Druck-Istwert entsprechendes Signal pᵢ um. Dabei wird davon ausgegangen, daß sowohl in der Leitung 20 als auch in dem Zylinder 21 derselbe Druck, nämlich Lastdruck, herrscht. Die Summe aus dem Volumen des Druckmittels im Zylinder 21 und dem Volumen des Druckmittels in der zu dem Zylinder 21 führenden Leitung 20 ist ein Maß für die hydraulische Kapazität des Verbrauchers.

Ein Drehmomentregler 25 bildet aus der Abweichung des Drehmoment-Istwerts Mdᵢ von einem Drehmoment-Sollwert Mdₛ das der Stelleinrichtung 16 als Stellgröße zugeführte Steuersignal y_{Md}. Der Drehmomentregelkreis ist mit dem Bezugszeichen 27 versehen.

Ein Druckregler 30 bildet aus einer Druck-Regeldifferenz x_{dp}, die aus der Abweichung des Druck-Istwerts pᵢ von einem Druck-Sollwert pₛ gebildet ist, ein Ausgangssignal yₚ*. Der Druckregler 30 besteht in diesem Ausführungsbeispiel nur aus einem P-Glied 31. Der Druck-Istwert pᵢ ist einem D-Glied 32 zugeführt, das seine zeitliche Ableitung bildet. Ein Rechenglied 33 bildet die Differenz aus dem Ausgangssignal yₚ* des Druckreglers 30 und dem Ausgangssignal des D-Glieds 32.

Ein Summierglied 34 verknüpft das Ausgangssignal des Rechenglieds 33 und das Ausgangssignal eines P-Glieds 35 zu einem Druck-Stellsignal yₚ. Das P-Glied 35 multipliziert den Druck-Sollwert pₛ mit einem Faktor K_{pMd}, der den Zusammenhang zwischen dem Druck-Sollwert pₛ und dem diesem entsprechenden Anteil des Antriebsdrehmoments Md berücksichtigt. Das Stellsignal yₚ ist einem ersten Eingang eines zwei Eingänge aufweisenden Auswahlglieds 36 zugeführt.

Ein P-Glied 37 bildet durch Multiplikation des Drehzahl-Istwerts nᵢ mit einem konstanten Faktor K_{nQ}, der das konstante Fördervolumen der Pumpe 12 berücksichtigt, ein Signal Qᵢ. Bei dem Signal Qᵢ handelt es sich um einen aus der Drehzahl n abgeleiteten Förderstrom-Istwert. Ein Förderstromregler 38 bildet aus einer Förderstrom-Regeldifferenz x_{dQ}, die aus der Abweichung des Förderstrom-Istwerts Qᵢ von einem Förderstrom-Sollwert Qₛ gebildet ist, ein zweites Stellsignal y_{Q}. Der Förderstromregler 38 enthält ein P-Glied 39 und ein zu diesem parallel angeordnetes I-Glied 40. Ein Summierglied 41 verknüpft das Ausgangssignal des P-Glieds 39 und das Ausgangssignal des I-Glieds 40 zu dem Stellsignal y_{Q}. Das Stellsignal y_{Q} ist dem anderen Eingang des Auswahlglieds 36 als Förderstrom-Stellsignal zugeführt.

Der Druckregler 30, das D-Verhalten aufweisende Glied 32, das P-Glied 35, der Förderstromregler 38 und das Auswahlglied 36 sind als zeitdiskret arbeitende Regelanordnung 48 ausgebildet. Das Auswahlglied 36 enthält einen gesteuerten Umschalter 43. Der Umschalter 43 führt dem Regelkreis 27 für das Drehmoment Md in der einen Schaltstellung das Stellsignal yₚ und in der anderen Schaltstellung das Stellsignal y_{Q} als Drehmoment-Sollwert Mdₛ zu, so daß in dem einen Fall der Druckregelkreis und in dem anderen Fall der Förderstromregelkreis geschlossen ist. Als Steuersignale für die Stellung des Umschalters 43 sind dem Auswahlglied 36 die Stellsignale yₚ und y_{Q} zugeführt. Die Regelanordnung 48 bildet in aufeinanderfolgenden Zyklen, die jeweils aus mehreren Schritten bestehen, den Drehmoment-Sollwert Mdₛ für den Drehmomentregelkreis 27. Aus den zu Beginn eines Zyklus am Eingang des Druckreglers 30 und am Eingang des Förderstromreglers 38 anstehenden Werten der Regeldifferenzen x_{dp} und x_{dQ} sowie des Druck-Sollwerts pₛ und des Druck-Istwerts pᵢ bildet die Regelanordnung 48 die Stellsignale yₚ und y_{Q}. Das Auswahlglied 36 wählt das kleinere der beiden Stellsignale aus und führt es dem Drehmomentregelkreis 27 so lange als Drehmoment-Sollwert Mdₛ zu, bis zu Beginn des darauffolgenden Zyklus die Stellsignale yₚ und y_{Q} neu gebildet sind. Das Auswahlglied 36 führt jetzt das kleinere der beiden in diesem Zyklus neu gebildeten Stellsignale dem Drehmomentregelkreis 27 als neuen Drehmoment-Sollwert Mdₛ zu. Somit ist einer der beiden Regelkreis geschlossen und der andere offen. Besitzt ein Regler, wie in dem in der Figur 1 dargestellten Ausführungsbeispiel der Förderstromregler 38, einen I-Anteil, so ändert sich dessen Ausgangssignal bei offenem Regelkreis und von Null verschiedener Regeldifferenz x_{dQ} entsprechend dem Übertragungsverhalten des I-Anteils. Dies bedeutet, daß sich auch das Ausgangssignal des Reglers in entsprechender Weise ändert. Damit das Ausgangssignal des Reglers des offenen Regelkreises nicht wegdriftet, sind die im folgenden beschriebenen zusätzlichen Schritte innerhalb eines Zyklus vorgesehen.

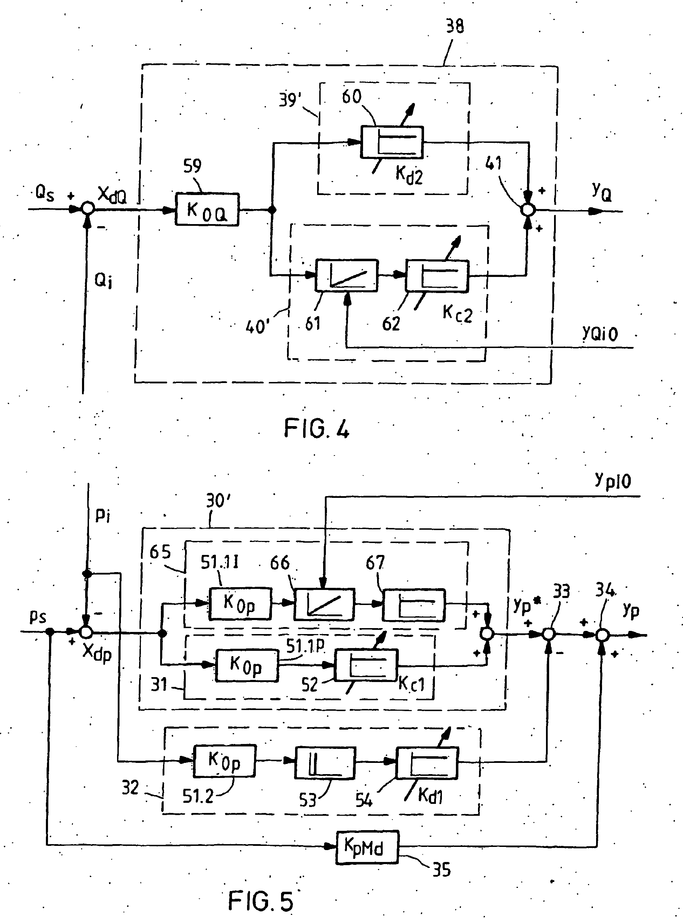

Für die Beschreibung dieser Schritte wird davon ausgegangen, daß das Stellsignal yₚ des Reglers 30 kleiner als das Stellsignal y_{Q} des Reglers 38 ist. In diesem Fall ist dem Drehmomentregelkreis 27 das Stellsignal yₚ als Drehmoment-Sollwert Mdₛ zugeführt. Dies bedeutet, daß der Druckregelkreis geschlossen und der Förderstromregelkreis offen ist. Um ein Wegdriften des Ausgangssignals y_{Q} des offenen Förderstromregelkreises zu verhindern, führt das Auswahlglied 36 dem I-Glied 40 in einem weiteren Schritt des Zyklus ein Korrektursignal y_{QI0} zu. Die Größe des Korrektursignals y_{QI0} ist dabei so bemessen, daß das Stellsignal y_{Q} am Ende eines Zyklus unter Berücksichtigung des Werts der Regeldifferenz x_{dQ} vom Zyklusbeginn gleich dem Stellsignal yₚ ist, das in diesem Zyklus als Drehmoment-Sollwert Mdₛ dient. Nach der Zuführung des Korrektursignals, y_{QI0}, das das Stellsignal y_{Q} dem Stellsignal yₚ angleicht, ist der betrachtete Zyklus beendet und ein neuer Zyklus beginnt. Die Regelanordnung 48 bildet aus der zu Beginn des neuen Zyklus am Eingang des Druckreglers 30 anstehenden Regeldifferenz x_{dp}, aus dem Druck-Sollwert pₛ, dem Druck-Istwert pᵢ sowie der am Eingang des Förderstromreglers 38 anstehenden Regeldifferenz x_{dQ} zunächst wieder neue Stellsignale yₚ und y_{Q}. Das Auswahlglied 36 wählt wieder das kleinere der beiden Stellsignale aus und führt es dem Drehmomentregelkreis 27 als neuen Drehmoment-Sollwert Mdₛ zu. Ist das Stellsignal yₚ wieder kleiner als das Stellsignal y_{Q}, bleibt der Druckregelkreis weiterhin geschlossen und dem I-Glied 40 wird wieder ein Korrektursignal y_{QI0} zugeführt, das so bemessen ist, daß das Stellsignal y_{Q} am Ende des Zyklus gleich dem Stellsignal yₚ ist. Ist dagegen das zu Beginn eines neuen Zyklus gebildete Stellsignal y_{Q} kleiner als das Stellsignal yₚ, leitet das Auswahlglied 36 das Stellsignal y_{Q} dem Drehmomentregelkreis 27 als neuen Drehmoment-Sollwert Mdₛ zu. Jetzt ist der Förderstromregelkreis geschlossen und der Druckregelkreis ist offen. Da der in der Figur 1 dargestellte Druckregler 30.nur einen P-Anteil aufweist, kann sein Ausgangssignal yₚ bei offenem Regelkreis nicht wegdriften. Aus diesem Grund braucht das Ausgangssignal yₚ zum Ende eines Zyklus nicht an das Ausgangssignal y_{Q} angeglichen zu werden. Anders ist es dagegen, wenn auch der Druckregler einen I-Anteil aufweist. Auf eine derartige Ausgestaltung des Druckreglers wird weiter unten im Zusammenhang mit der Figur 5 eingegangen.

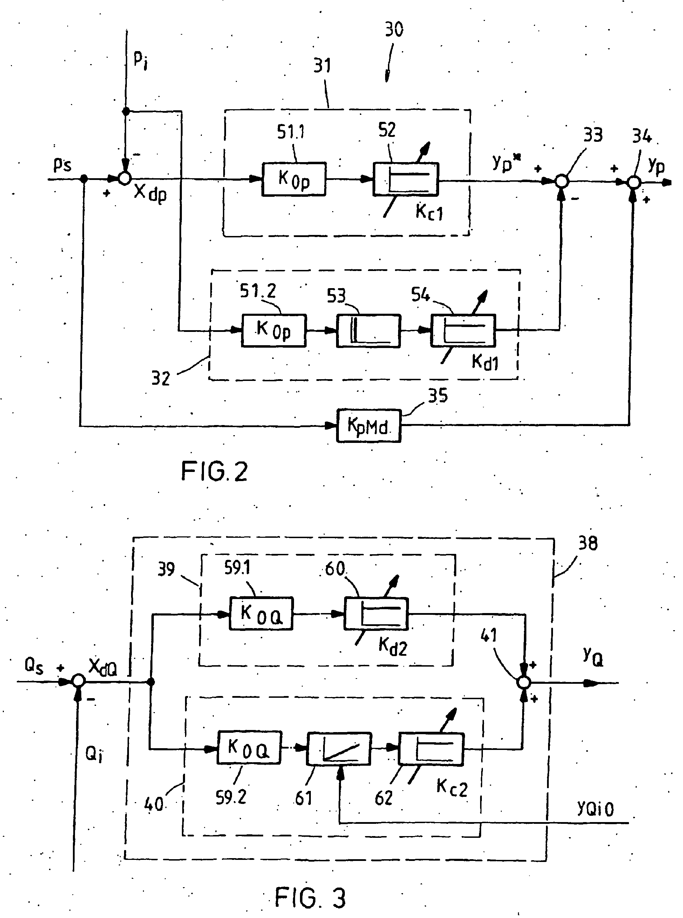

Das in der Figur 2 dargestellte Blockschaltbild zeigt den in der Figur 1 dargestellten Druckregler 30 mit einem P-Glied 31, das D-Glied 32 sowie das P-Glied 35 in ausführlicherer Form als in der Figur 1. In dieser Darstellung ist das P-Glied 31 als Hintereinanderschaltung eines P-Glieds 51.1 mit einem konstanten Verstärkungsfaktor K₀ₚ und eines P-Glieds 52 mit einstellbarem Parameter K_{c1} ausgebildet. Das D-Glied 32 ist als Hintereinanderschaltung eines P-Glieds 51.2 mit konstantem Verstärkungsfaktor K₀ₚ, eines D-Glieds 53 und eines diesem nachgeschalteten P-Glieds 54 mit einstellbarem Parameter K_{d1} ausgebildet. Die mit K₀ₚ bezeichneten Verstärkungsfaktoren der P-Glieder 51.1 und 51.2 sind gleich groß. In dem Verstärkungsfaktor K₀ₚ ist der Zusammenhang zwischen der Druckänderung und der Drehgeschwindigkeit bei verschwindendem Lastvolumenstrom zusammengefaßt, wobei die hydraulische Kapazität des Verbrauchers bestehend aus dem Zylinder 21 einschließlich der zu ihm führenden Leitung 20 sowie das Fördervolumen der Pumpe 12 berücksichtigt sind. Somit erfolgt eine Umwandlung von Druckgrößen in Bewegungsgrößen. Der Parameter K_{d1} entspricht dem Dämpfungskoeffizienten der Strecke und der Parameter K_{c1} ihrem Steifigkeitskoeffizienten.

Die Figur 3 zeigt das Blockschaltbild des in der Figur 1 dargestellten Förderstromreglers 38 in einer ausführlicheren Form. In dieser Darstellung ist das P-Glied 39 als Hintereinanderschaltung eines P-Glieds 59.1 mit einem konstanten Verstärkungsfaktor K_{0Q} und eines P-Glieds 60 mit einstellbarem Parameter K_{d2} ausgebildet. Das I-Glied 40 ist als Hintereinanderschaltung eines P-Glieds 59.2 mit konstantem Verstärkungsfaktor K_{0Q}, eines I-Glieds 61 und eines diesem nachgeschalteten P-Glieds 62 mit einstellbarem Parameter K_{c2} ausgebildet. Die mit K_{0Q} bezeichneten Verstärkungsfaktoren der P-Glieder 59.1 und 59.2 sind gleich groß. In dem Verstärkungsfaktor K_{0Q} ist der Zusammenhang zwischen dem Förderstrom und der Drehgeschwindigkeit zusammengefaßt und dabei das Fördervolumen der Pumpe 12 berücksichtigt. Bei dem Parameter K_{c2} handelt es sich um den Steifigkeitskoeffizienten der Strecke und bei dem Parameter K_{d2} um ihren Dämpfungskoeffizienten.

Die Figur 4 zeigt eine gegenüber der Figur 3 vereinfachte Darstellung des Förderstromreglers 38. In der Figur 4 sind die P-Glieder 59.1 und 59.2 der parallelen Zweige 39 und 40 des Förderstromreglers 38 in üblicher Weise zu einem gemeinsamen P-Glied 59 mit dem Verstärkungsfaktor K_{0Q} zusammengefaßt. An das P-Glied 59 schließt sich die Parallelschaltung der Glieder 39' und 40' an. Die in der Figur 3 verwendete Darstellung mit den getrennten P-Gliedern 59.1 und 59.2 wurde gewählt, um die Zusammenhänge besser darzustellen.

Wie in den Figuren 2 und 3 sowie in der der Figur 3 entsprechenden Figur 4 dargestellt, erfolgt eine Aufteilung des P-Glieds 31 und des D-Glieds 32 sowie eine Aufteilung des P-Glieds 39 und des I-Glieds 40 in einen Block mit dem festen Verstärkungsfaktor K₀ₚ bzw. K_{0Q} und einen diesem nachgeschalteten Block mit einstellbaren Parameter K_{c1}, K_{d1}, K_{c2}, K_{d2}. Die Verstärkungsfaktoren K₀ₚ und K_{0Q} lassen sich aus den Daten des Motors 11, der Pumpe 12, der Leitung 20 und des Zylinders 21 sowie den Eigenschaften der Druckflüssigkeit, insbesondere deren Kompressibilität, bestimmen. Die oben beschriebene Aufteilung erlaubt es, den Parameter K_{c2} gleich dem Parameter K_{c1} und den Parameter K_{d2} gleich dem Parameter K_{d1} einzustellen. Für die Optimierung der Reglerparameter genügt es daher, nur die Parameter eines der beiden Regler zu optimieren. Die entsprechenden Parameter des jeweils anderen Reglers können danach auf die zuvor für den ersten Regler ermittelten Werte eingestellt werden. Die Optimierung läßt sich in vorteilhafter Weise so durchführen, daß zunächst bei geschlossenem Förderstromregelkreis dessen Parameter K_{c2} und K_{d2} optimiert werden und danach die Parameter K_{c1} und K_{d1} des Druckregelkreises auf dieselben Werte eingestellt werden. Dieses Vorgehen hat den Vorteil, daß die Optimierung erfolgen kann, ohne daß die Motor-Pumpe-Einheit an eine hydraulische Last angeschlossen ist. Damit ist es möglich, die Parameter des Förderstromreglers bereits vor der Auslieferung der Motor-Pumpe-Einheit zu optimieren und diese Parameter dann für den Druckregler zu übernehmen. Eine Anpassung des Druckreglers an die Lastverhältnisse erfolgt dann lediglich durch Einstellung des Parameters K₀ₚ auf die im speziellen Anwendungsfall wirksame hydraulische Kapazität.

Die Figur 5 zeigt das Blockschaltbild eines gegenüber der Figur 2 um einen Zweig 65 mit I-Verhalten erweiterten Druckreglers 30' mit PI-Verhalten. Der Zweig 65 mit I-Verhalten ist parallel zu dem Zweig 31 geschaltet und besteht aus einem P-Glied 51.1I mit dem Verstärkungsfaktor K₀ₚ, einem I-Glied 66 sowie einem diesem nachgeschalteten P-Glied 67. Der Zweig 65 mit I-Verhalten sorgt dafür, daß die bei dem in der Figur 2 dargestellten Druckregler 30 mit P-Verhalten auftretende bleibende Regeldifferenz x_{dp} im eingeschwungenen Zustand zu Null wird. Bei einer derartigen Ausgestaltung des Druckreglers muß dafür gesorgt werden, daß bei offenem Druckregelkreis das Ausgangssignal des I-Glieds 66 und damit auch das Ausgangssignal yₚ* des Druckreglers 30' nicht wegdriftet. Um ein Wegdriften des Ausgangssignals yₚ* und damit auch des Stellsignals yₚ des offenen Druckregelkreises zu verhindern, führt das Auswahlglied 36 dem I-Glied 66 in einem weiteren Schritt des Zyklus ein Korrektursignal y_{pI0} zu. Die Größe des Korrektursignals y_{QI0} ist dabei so bemessen, daß das Stellsignal yₚ am Ende eines Zyklus unter Berücksichtigung der Werte der Regeldifferenz x_{dp} sowie des Druck-Istwerts pᵢ vom Zyklusbeginn gleich dem Stellsignal y_{Q} ist, das in diesem Zyklus als Drehmoment-Sollwert Mdₛ dient. Nach der Zuführung des Korrektursignals y_{pI0}, das das Stellsignal yₚ dem Stellsignal y_{Q} angleicht, ist der betrachtete Zyklus beendet und ein neuer Zyklus beginnt wie oben im Zusammenhang mit der Figur 1 beschrieben.

Wie bereits oben beschrieben, bilden der Druckregler 30 bzw. 30', das D-Glied 32, das P-Glied 35, der Förderstromregler 38 und das Auswahlglied 36 die Regelanordnung 48, der die Druck-Regeldifferenz x_{dp}, der Druck-Sollwert pₛ, der Druck-Istwert pᵢ und die Förderstrom-Regeldifferenz x_{dQ} als Eingangssignale zugeführt sind und deren Ausgangssignal der Sollwert M_{ds} für den Drehmomentregelkreis 27 ist. Die Regelanordnung 48 ist wie oben beschrieben als zeitdiskret arbeitende Regelanordnung ausgebildet. Der Drehmomentregelkreis 27, die Motor-Pumpe-Einheit 13 mit der zugehörigen Hydraulikversorgung sowie der Zylinder 21 mit der zwischen ihm und der Pumpe 12 angeordneten Leitung 20 bilden einen Block 49, dem der Drehmoment-Sollwert Mdₛ als Eingangssignal zugeführt ist und dessen Ausgangssignale pᵢ und Qᵢ die Istwerte für die Druck- bzw. Förderstromregelung sind.

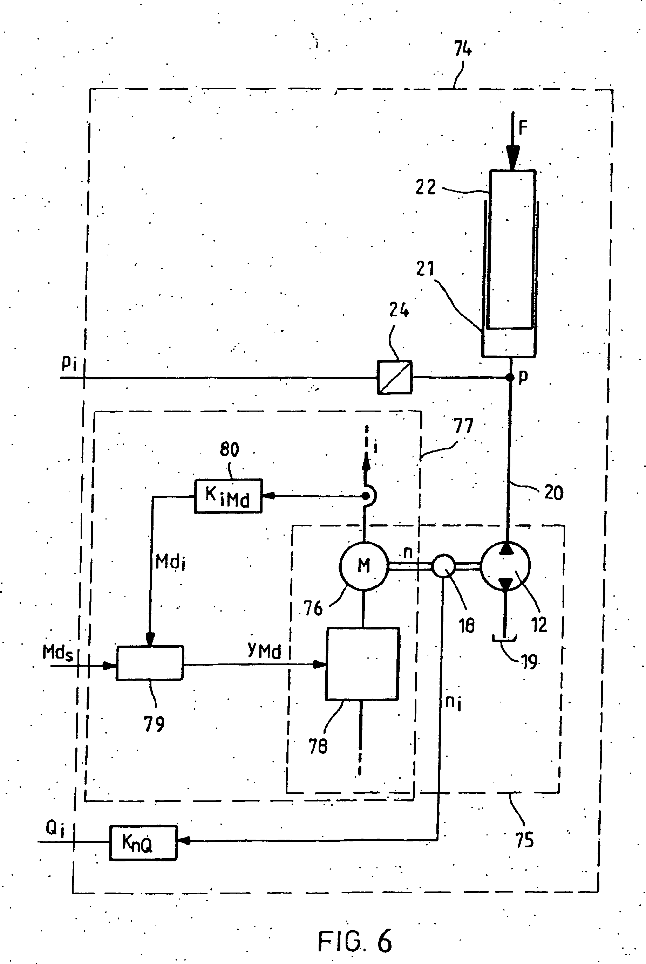

Die Figur 6 zeigt einen, dem Block 49 in der Figur 1 entsprechenden Block 74. Wie dem Block 49 ist dem Block 74 der Drehmoment-Sollwert Mdₛ als Eingangssignal zugeführt. Ausgangssignale des Blocks 74 sind - wie auch bei dem Block 49 - der Druck-Istwert pᵢ und der Förderstrom-Istwert Qᵢ. Der Block 74 enthält eine Motor-Pumpe-Einheit 75 mit einem die Pumpe 12 antreibenden drehzahlgesteuerten Elektromotor 76 sowie einen Drehmomentregelkreis 77. Ein steuerbarer Frequenzumrichter 78 versorgt den Elektromotor 76 mit elektrischer Energie. Die Steuerung des Frequenzumrichters 78 erfolgt durch das Stellsignal y_{Md} eines Drehmomentreglers 79. Der von dem Elektromotor 76 aufgenommene Strom i ist ein Maß für das Drehmoment Md. Durch Multiplikation des Stroms i mit einem Faktor K_{iMd}, der den Zusammenhang zwischen dem Strom i und dem Drehmoment Md berücksichtigt, erhält man den Drehmoment-Istwert Mdi. In dem hier beschriebenen Ausführungsbeispiel'erfolgt die entsprechende Multiplikation durch ein P-Glied 80. Der Drehmomentregler 79 bildet aus der Abweichung des Drehmoment-Istwerts Mdi von dem Drehmoment-Sollwert Mdₛ das dem Frequenzumrichter 78 als Stellgröße zugeführte Steuersignal y_{Md}.

Wie in dem in der Figur 1 dargestellten Block 48 formt der Drehzahlgeber 18 die Drehzahl n des die Pumpe 12 antreibenden Motors 76 in den Drehzahl-Istwert nᵢ um. Durch Multiplikation des Drehzahl-Istwerts nᵢ mit dem konstanten Faktor K_{nQ}, der das konstante Fördervolumen der Pumpe 12 berücksichtigt, erhält man das Signal Qᵢ, das dem in der Figur 1, der Figur 3 oder der Figur 4 dargestellten Förderstromregler 38 als aus der Drehzahl n abgeleiteter Förderstrom-Istwert zugeführt ist.

Wie bereits anhand der Figur 1 beschrieben, fördert die Pumpe 12 in der einen Drehrichtung aus dem Tank 19 Druckmittel über die Leitung 20 zu dem einfach wirkender Zylinder 21, dessen Kolben 22 mit der Kraft F beaufschlagt ist. In der anderen Drehrichtung führt die Pumpe 12 Druckmittel von dem Zylinder 21 über die Leitung 20 zum Tank 19 zurück. Der an die Leitung 20 angeschlossene Druckgeber 24 formt den Druck p des Druckmittels in das dem Druck-Istwert entsprechende Signal pᵢ um.

Die erfindungsgemäße Regeleinrichtung ist zusammen mit der in der Figur 1 dargestellten Regelanordnung 48 sowohl für eine hydraulisch angetriebene Motor-Pumpe-Einheit 13 (wie in der Figur 1 dargestellt) als auch für eine elektrisch angetriebene Motor-Pumpe-Einheit 74 (wie in der Figur 6 dargestellt) einsetzbar.

## Patentansprüche

1. Einrichtung zur ablösenden Regelung von Druck und Förderstrom eines hydraulischen Druckmittels, das einem von einer Last beaufschlagten Verbraucher (20, 21) zugeführt ist,
- die eine Motor-Pumpe-Einheit (13) mit einem die dem Verbraucher zugeführte Leistung steuernden Stellsignal beaufschlagt,
- mit einem ersten Vergleichsglied, das aus einem Druck-Sollwert (pₛ) und einem Druck-Istwert (pᵢ) eine Druck-Regeldifferenz (X_{dp}) bildet,
- mit einem ersten Regler (30), der die Druck-Regeldifferenz (X_{dp}) zu einem ersten Stellsignal (Yₚ) verarbeitet,
- mit einem zweiten Vergleichsglied, das aus einem Förderstrom-Sollwert (Qₛ) und einem aus der Drehzahl des Motors abgeleiteten Förderstrom-Istwer (Qᵢ) eine Förderstrom-Regeldifferenz (x_{dQ}) bildet,
- mit einem zweiten Regler (38), der die Förderstrom-Regeldifferenz (x_{dQ}) zu einem zweiten Stellsignal (Y_{Q}) verarbeitet, und
- mit einem Auswahlglied (36), das eines der beiden Stellsignale auswählt und dem Motor (11) der Motor-Pumpe-Einheit (13) zuführt,
**dadurch gekennzeichnet,**
- **daß** der erste Regler (30) einen Zweig (31) mit P-verhalten aufweist,
- **daß** der Druck-Istwert (pᵢ) einem D-Verhalten aufweisenden Glied (32) zugeführt ist,
- **daß** die Summe aus der Differenz zwischen dem Ausgangssignal (yₚ*) des ersten Reglers (30) und dem Ausgangssignal des D-Glieds (32) und dem Produkt aus dem Druck-Sollwert (pₛ) und einem die pro Umdrehung der Pumpe (12) geförderte Druckmittelmenge berücksichtigenden Faktor (K_{pMd}) dem Auswahlglied (36) als erstes Stellsignal (yₚ) zugeführt ist,
- **daß** der zweite Regler (38) einen Zweig (39) mit P-Verhalten und einen zu diesem parallel angeordneten Zweig (40) mit I-Verhalten aufweist,
- **daß** das von dem Auswahlglied (36) ausgewählte Stellsignal (yₚ, y_{Q}) einem Regelkreis (27; 77) für das Antriebsdrehmoment des Motors (11; 76) als Drehmoment-Sollwert (Mdₛ) zugeführt ist,
- **daß** der erste Regler (30), das D-Verhalten aufweisende Glied (32), der zweite Regler (38) und das Auswahlglied (36) Bestandteile einer zeitdiskret arbeitenden Regelanordnung (48) sind, die den Drehmoment-Sollwert (Mdₛ) in aufeinanderfolgenden jeweils aus mehreren Schritten bestehenden Zyklen bildet,
- **daß** die Regelanordnung (48) zu Beginn eines Zyklus die Stellsignale (yₚ, y_{Q}) bildet, das jeweils kleinere von ihnen auswählt und dem Drehmomentregelkreis (27) so lange als Drehmoment-Sollwert (Mdₛ) zuführt, bis im nächsten Zyklus neue Stellsignale vorliegen, und wenn das erste Stellsignal (yₚ) in dem aktuellen Zyklus als Drehmoment-Sollwert (Mdₛ) dient, in einem weiteren Schritt des Zyklus einen Korrekturwert (y_{QI0}) für das I-Glied (40) des zweiten Reglers (38) bildet, der so bemessen ist, daß bei offenem Förderstrom-Regelkreis das zweite Stellsignal (y_{Q}) am Ende eines Zyklus gleich dem ersten Stellsignal (yₚ) ist.

2. Regeleinrichtung nach Anspruch 1, **dadurch gekennzeichnet, daß** in Fällen, in denen beide Stellsignale (yₚ, y_{Q}) gleich groß sind, dem Regelkreis für das Drehmoment das erste Stellsignal (yₚ) als Drehmoment-Sollwert (Mdₛ) zugeführt ist.

3. Regeleinrichtung nach Anspruch 1 oder Anspruch 2, **dadurch gekennzeichnet,**
- **daß** der P-Verhalten aufweisende Zweig (31) des ersten Reglers (30) als Hintereinanderschaltung eines ersten P-Glieds (51.1), dessen Verstärkungsfaktor (K₀ₚ) die hydraulische Kapazität des Verbrauchers (20, 21) und das Fördervolumen der Pumpe (12) berücksichtigt, und eines zweiten P-Glieds (52) mit einstellbarem Verstärkungsfaktor (K_{c1}) ausgebildet ist,
- **daß** das D-Verhalten aufweisende Glied (32) als Hintereinanderschaltung eines dritten P-Glieds (51.2), dessen Verstärkungsfaktor (K₀ₚ) gleich demjenigen des ersten P-Glieds (51.1) ist, eines D-Glieds (53) sowie eines vierten P-Glieds (54) mit einstellbarem Verstärkungsfaktor (K_{d1}) ausgebildet ist
- **daß** der P-Verhalten aufweisende Zweig (39) des zweiten Reglers (38) als Hintereinanderschaltung eines fünften P-Glieds (59.1), dessen Verstärkungsfaktor (K_{0Q}) das Fördervolumen der Pumpe (12) berücksichtigt, und eines sechsten P-Glieds (60) mit einstellbarem Verstärkungsfaktor (K_{d2}) ausgebildet ist,
- **daß** der I-verhalten aufweisende Zweig (40) des zweiten Reglers (38) als Hintereinanderschaltung eines siebten P-Glieds (59.2), dessen Verstärkungsfaktor (K_{0Q}) gleich demjenigen des fünften P-Glieds (59.1) ist, eines I-Glieds (61) sowie eines achten P-Glieds (62) mit einstellbarem Verstärkungsfaktor (K_{c2}) ausgebildet ist,
- **daß** der Verstärkungsfaktor (K_{c2}) des achten P-Glieds (62) auf denselben Wert wie der Verstärkungsfaktor (K_{c1}) des zweiten P-Glieds (52) eingestellt ist und
- **daß** der Verstärkungsfaktor (K_{d2}) des sechsten P-Glieds (60) auf denselben Wert wie der Verstärkungsfaktor (K_{d1}) des vierten P-Glieds (54) eingestellt ist.

4. Regeleinrichtung nach Anspruch 3, **dadurch gekennzeichnet, daß** das fünfte und das siebte P-Glied (59.1, 59.2) durch ein für den P-Anteil (39) und den I-Anteil (40) gemeinsames P-Glied (59) ersetzt sind.

5. Regeleinrichtung nach einem der Ansprüche 1 bis 4, **dadurch gekennzeichnet,**
- **daß** der erste Regler (30') als PI-Regler ausgebildet ist, zu dessen P-Anteil (31) der 1-Anteil (65) parallelgeschaltet ist, und
- **daß** die Regelanordnung (48), wenn das zweite Stellsignal (y_{Q}) in dem aktuellen Zyklus als Drehmoment-Sollwert (Mdₛ) dient, in einem weiteren Schritt des Zyklus einen Korrekturwert (y_{pI0}) für das I-Glied (66) des ersten Reglers (30') bildet, der so bemessen ist, daß bei offenem Druck-Regelkreis das erste Stellsignal (yₚ) am Ende eines Zyklus gleich dem Wert des zweiten Stellsignals (y_{Q}) ist.

6. Regeleinrichtung nach einem der vorhergehenden Ansprüche, **dadurch gekennzeichnet, daß** bei Antrieb der Hydropumpe (12) durch einen Hydromotor (11) mit Schwenkwinkelverstellung der Drehmoment-Istwert (Mdᵢ) als Produkt aus dem Schwenkwinkel-Istwert und einem den Zusammenhang zwischen dem Schwenkwinkel (α) und dem Antriebsdrehmoment (Md) der Motor-Pumpe-Einheit (13) berücksichtigenden Faktor (K_{αMd}) gebildet ist.

7. Regeleinrichtung nach einem der Ansprüche 1 bis 5, **dadurch gekennzeichnet, daß** bei Antrieb der Hydropumpe (12) durch einen drehzahlgesteuerten Elektromotor (76) der Drehmoment-Istwert (Mdᵢ) als Produkt aus dem Motorstrom-Istwert und einem den Zusammenhang zwischen dem Mötorstrom (i) und dem Antriebsdrehmoment (Md) der Motor-Pumpe-Einheit (75) berücksichtigenden Faktor (K_{iMd}) gebildet ist.

## Claims

1. A device for the alternating control of pressure and flow of a hydraulic pressure medium which is fed to a consumer (20, 21) that is acted upon by a load,
- which acts upon a motor-pump unit (13) with a command signal controlling the power fed to the consumer,
- with a first comparator element which generates a pressure control differential (x_{dp}) from a pressure set value (pₛ) and a pressure actual value (pᵢ),
- with a first controller (30) which processes the pressure control differential (x_{dp}) into a first command signal (yₚ),
- with a second comparator element which generates a flow control differential (x_{dQ}) from a flow set value (Qₛ) and a flow actual value (Qᵢ) derived from the speed of the motor,
- with a second controller (38) which processes the flow control differential (x_{dQ}) to a second command signal (y_{Q}) and
- with a selector element (36) which selects and feeds one of the two command signals to the motor (11) of the motor-pump unit (13),
**characterized by the fact that**
- the first controller (30) has a branch (31) with P-behaviour,
- that the pressure actual value (pᵢ) is fed to an element (32) with D-behaviour,
- that the sum of the difference between the output signal (yₚ*) of the first controller (30) and the output signal of the D-element (32), and the product of the pressure set value (pₛ) and a factor (K_{pMd}) taking account of quantity of pressure medium delivered per revolution of the pump (12) is fed to the selector element (36) as a first command signal (yₚ),
- that the second controller (38) has a branch (39) with P-behaviour and, arranged in parallel thereto, a branch (40) with I-behaviour,
- that the command signal (yₚ, y_{Q}) selected by the selector element (36) is fed to a control loop (27; 77) as a torque set value (Mdₛ) for the drive torque of the motor (11; 76),
- that the first controller (30), the element (32) having D-behaviour, the second controller (38) and the selector element (36) are integral parts of a control arrangement (48) working in a time discrete manner which generates the torque set value (Mdₛ) in successive cycles each consisting of several steps,
- that the control arrangement (48) generates the command signals (yₚ, y_{Q}) at the beginning of a cycle, selects the smaller of these in each case and feeds it as a torque set value (Mdₛ) to the torque control loop (27), continuing to do so until new command signals are available in the next cycle, and when the first command signal (yₚ) serves as the torque set value (Mdₛ) in the current cycle, in a further step of the cycle generates a correction value (y_{QI0}) for the I-element (40) of the second controller (38) that is of a magnitude such that when the flow control loop is open the second command signal (y_{Q}) will at the end of a cycle be equal to the first command signal (yₚ).

2. A control device according to claim 1, **characterized by the fact that** in cases in which the two command signals (yₚ, y_{Q}) are of equal magnitude, the first command signal (yₚ) is fed to the control loop for the torque as a torque set value (Mdₛ).

3. A control device according to claim 1 or claim 2, **characterized by the fact that**
- the branch (31) with P-behaviour of the first controller (30) is configured as a series connection of a first P-element (51.1), the gain factor (K₀ₚ) of which takes into account the hydraulic capacity of the consumer (20, 21) and the delivery volume of the pump (12), and a second P-element (52) with an adjustable gain factor (K_{c1}),
- that the element (32) with D-behaviour is configured as a series connection of a third P-element (51.2), the gain factor (K₀ₚ) of which is equal to that of the first P-element (51.1), a D-element (53) and a fourth P-element (54) with adjustable gain factor (K_{d1}),
- that the branch (39) with P-behaviour of the second controller (38) is configured as a series connection of a fifth P-element (59.1), the gain factor (K_{0Q}) of which takes into account the delivery volume of the pump (12), and a sixth P-element (60) with adjustable gain factor (K_{d2}),
- that the branch (40) with I-behaviour of the second controller (38) is configured as a series connection of a seventh P-component (59.2), the gain factor (K_{0Q}) of which is equal to that of the fifth P-element (59.1), an I-element (61) and an eighth P-element (62) with adjustable gain factor (K_{c2}),
- that the gain factor (K_{c2}) of the eighth P-element (62) is adjusted to the same value as the gain factor (K_{c1}) of the second P-element (52), and
- that the gain factor (K_{d2}) of the sixth P-element (60) is adjusted to the same value as the gain factor (K_{d1}) of the fourth P-element (54).

4. A control device according to claim 3, **characterized by the fact that** the fifth and the seventh P-element (59.1, 59.2) are replaced by a common P-element (59) for the P-component (39) and the 1-component (40).

5. A control device according to any of claims 1 to 4, **characterized by the fact that**
- the first controller (30') is configured as a PI-controller, in which the I-component (65) is connected in parallel to its P-component (31), and
- that, when the second command signal (y_{Q}) serves as the torque set value (Mdₛ) in the current cycle, the control arrangement (48) generates in a further step of the cycle a correction value (y_{pI0}) for the I-element (66) of the first controller (30'), which is of a magnitude such that when the pressure control loop is open the first command signal (yₚ) will at the end of the cycle be equal to the value of the second command signal (y_{Q}).

6. A control device according to any of the preceding claims, **characterized by the fact that** when the hydraulic pump (12) is driven by a hydraulic motor (11) with swivel angle adjustment the torque actual value (Mdᵢ) is generated as a product of the swivel angle actual value and a factor (K_{αMd}) which takes into account the relationship between the swivel angle (α) and the drive torque (Md) of the motor-pump unit (13).

7. A control device according to any of the claims 1 to 5, **characterized by the fact that** when the hydraulic pump (12) is driven by a speed-controlled electric motor (76) the torque actual valve (Mdᵢ) is generated as a product of the motor current actual value and a factor (K_{iMd}) which takes into account the relationship between the motor current (i) and the drive torque (Md) of the motor-pump unit (75).

## Revendications

1. Dispositif pour la régulation relayant pression et volume refoulé d'un fluide de pression hydraulique, lequel est ramené vers un récepteur (20, 21) soumis à l'effet d'une charge,
- qui soumet une unité (13) moto-pompe à un signal de commande commandant la puissance transmise au récepteur,
- doté d'un premier élément de comparaison, qui forme une différence (x_{dp}) de régulation de la pression .à partir d'une consigne (pₛ) de pression et d'une valeur réelle (pᵢ) de la pression,
- doté d'un premier régulateur (30), qui transforme la différence (x_{dp}) de régulation de la pression en un premier signal (yₚ) de commande,
- doté d'un deuxième élément de comparaison, qui forme une différence (x_{dQ}) de régulation du débit refoulé à partir d'une consigne (Qₛ) de débit refoulé et d'une valeur réelle (Qᵢ) du débit refoulé, dérivée de la vitesse de rotation du moteur,
- doté d'un deuxième régulateur (38), qui transforme la différence (x_{dQ}) de régulation du débit refoulé en un deuxième signal (y_{Q}) de commande, et
- doté d'un élément (36) de sélection, qui choisit un des deux signaux de commande et le ramène au moteur (11) de l'unité (13) moto-pompe,
**caractérisé en ce**
- **que** le premier régulateur (30) présente une branche (31) avec un comportement P,
- **que** la valeur réelle (pᵢ) de la pression est transmise à un élément (32) présentant un comportement D,
- **que** la somme de la différence entre le signal (yₚ*) de sortie du premier régulateur (30) et le signal de sortie de l'élément D (32) et du produit entre la consigne (pₛ) de pression et un coefficient (K_{pMd}), lequel tient compte de la quantité de fluide de pression refoulée par tour de la pompe (12), est transmise à l'élément (36) de sélection en tant que premier signal (yₚ) de commande,
- **que** le deuxième régulateur (38) présente une branche (39) avec un comportement P et une branche (40), disposée en parallèle avec la précédente, avec un comportement I,
- **que** le signal (yₚ, y_{Q}) de commande choisi par l'élément (36) de sélection, en tant que consigne (Mdₛ) de couple de rotation, est ramené vers une boucle (27 ; 77) d'asservissement pour le couple de rotation d'entraînement du moteur (11 ; 76),
- **que** le premier régulateur (30), l'élément (32) présentant un comportement D, le deuxième régulateur (38) et l'élément (36) de sélection sont des composants d'un dispositif (48) de régulation travaillant à valeurs discrètes en temps, qui forme la consigne (Mdₛ) de couple de rotation au cours de cycles consécutifs, chacun desquels est constitué de plusieurs étapes,
- **que** le dispositif (48) de régulation au début d'un cycle forme les signaux (yₚ, y_{Q}) de commande, choisit le plus bas des deux, selon le cas, et le transmet à la boucle (27) d'asservissement du couple de rotation en tant que consigne (Mdₛ) de couple de rotation, jusqu'à ce que de nouveaux signaux de commande soient disponibles dans le cycle suivant, et, lorsque le premier signal (yₚ) de commande sert de consigne (Mdₛ) de couple de rotation dans le cycle en cours, forme dans une étape suivante du cycle une valeur (y_{QI0}) de correction pour l'élément I (40) du deuxième régulateur (38), laquelle est dimensionnée de façon à ce que, pour une boucle d'asservissement du débit refoulé ouverte, le deuxième signal (y_{Q}) de commande en fin de cycle égale le premier signal (yₚ) de commande.

2. Dispositif de régulation selon la revendication n° 1, **caractérisé en ce que** dans l'éventualité où les deux signaux (yₚ, y_{Q}) de commande sont égaux, le premier signal (yₚ) de commande est transmis à la boucle d'asservissement pour le couple de rotation en tant que consigne (Mdₛ) de couple de rotation.

3. Dispositif de régulation selon la revendication n° 1 ou la revendication n° 2, **caractérisé en ce**
- **que** la branche (31), présentant un comportement P, du premier régulateur (30) est conçue sous forme de branchement consécutif d'un premier élément P (51.1), dont le coefficient (K₀ₚ) d'amplification tient compte de la capacité hydraulique du récepteur (20, 21) et du volume de refoulement de la pompe (12), et d'un deuxième élément P (52), doté d'un coefficient (K_{c1}) d'amplification pouvant être calibré,
- **que** l'élément (32), présentant le comportement D, est conçu sous forme de branchement consécutif d'un troisième élément P(51.2), dont le coefficient (K₀ₚ) d'amplification égale celui du premier élément P (51.1), d'un élément D (53), ainsi que d'un quatrième élément P (54), doté d'un coefficient (K_{d1}) d'amplification pouvant être calibré,
- **que** la branche (39), présentant un comportement P, du deuxième régulateur (38) est conçue sous forme de branchement consécutif d'un cinquième élément P (59.1), dont le coefficient (K_{0Q}) d'amplification tient compte du volume de refoulement de la pompe (12), et d'un sixième élément P (60), doté d'un coefficient (K_{d2}) d'amplification pouvant être calibré,
- **que** la branche (40), présentant un comportement I, du deuxième régulateur (38) est conçue sous forme de branchement consécutif d'un septième élément P (59.2), dont le coefficient (K_{0Q}) d'amplification égale celui du cinquième élément P (59.1), d'un élément I (61), ainsi que d'un huitième élément P (62), doté d'un coefficient (K_{c2}) d'amplification pouvant être calibré,
- **que** le coefficient (K_{c2}) d'amplification du huitième élément P (62) est calibré sur la même valeur que le coefficient (K_{c1}) d'amplification du deuxième élément P (52) et
- **que** le coefficient (K_{d2}) d'amplification du sixième élément P (60) est calibré sur la même valeur que le coefficient (K_{d1}) d'amplification du quatrième élément P (54).

4. Dispositif de régulation selon la revendication n° 3, **caractérisé en ce que** le cinquième et le septième élément P (59.1, 59.2) sont remplacés par un élément P (59), commun pour l'élément P (39) et l'élément I (40).

5. Dispositif de régulation selon une des revendications n° 1 à n° 4, **caractérisé en ce**
- **que** le premier régulateur (30') est conçu sous forme de régulateur PI, dont la part P (31) est branchée en parallèle avec la part I (65),
- **que**, lorsque dans le cycle en cours le deuxième signal (y_{Q}) de commande sert de consigne (Mdₛ) de couple de rotation, le dispositif (48) de régulation dans une étape ultérieure du cycle forme une valeur (y_{pI0}) de correction pour l'élément I (66) du premier régulateur (30'), qui est dimensionnée de façon telle que, pour une boucle d'asservissement de la pression ouverte, le premier signal (yₚ) de commande en fin de cycle égale la valeur du deuxième signal (y_{Q}) de commande.

6. Dispositif de régulation selon une des revendications précédentes, **caractérisé en ce que** lors d'un entraînement de la pompe (12) hydraulique par un moteur (11) hydraulique doté de variation d'angle de pivotement, la valeur réelle (Mdᵢ) du couple de rotation est formée par multiplication de la valeur réelle de l'angle de pivotement par un coefficient (K_{αMd}), qui tient compte de la relation entre l'angle (α) de pivotement et le couple (Md) de rotation d'entraînement de l'unité (13) moto-pompe.

7. Dispositif de régulation selon une des revendications n° 1 à n° 5, **caractérisé en ce que** lors d'un entraînement de la pompe (12) hydraulique par un moteur (76) électrique à commande de la vitesse de rotation, la valeur réelle (Mdᵢ) du couple de rotation est formée par multiplication de la valeur réelle du courant du moteur par un coefficient (K_{iMd}), qui tient compte de la relation entre le courant (i) du moteur et le couple (Md) de rotation d'entraînement de l'unité (75) moto-pompe.
